**Europäisches Patentamt**

**European Patent Office**

**Office européen des brevets**

(19)

(11) Numéro de publication: **0 140 757**
A2

(12) # DEMANDE DE BREVET EUROPEEN

(21) Numéro de dépôt: **84401922.4**

(22) Date de dépôt: **26.09.84**

(51) Int. Cl.⁴: **H 01 B 11/18,** H 01 B 13/00, H 01 B 13/14

(30) Priorité: **29.09.83 FR 8315694**

(43) Date de publication de la demande: **08.05.85** Bulletin 85/19

(84) Etats contractants désignés: **CH DE GB LI SE**

(71) Demandeur: **HABIA CABLE S.A., Route de Châlons, F-51210 Montmirail (FR)**

(72) Inventeur: **Battais, Alain, Habia Cable SA Route de Châlons, F-51210 Montmirail (FR)**

(74) Mandataire: **Gérardin, Robert Jean René, Cabinet Robert Gérardin 2, rue Gambetta, F-51200 Epernay (FR)**

(54) **Cable coaxial pour transmissions en hyperfréquences.**

(57) L'invention concerne un câble coaxial destiné à la transmission de signaux de très hautes fréquences.

Ce câble coaxial comporte une couche de matière isolante diélectrique constituée de polytétrafluorométhylène ou d'une composition comportant au moins 80% de ce produit nommé ci-après COMPOUND. La couche de matière isolante est obtenue directement par extrusion à froid d'une poudre de COMPOUND, du mélange intime d'un agent porogène et d'un agent d'expansion et d'une essence de lubrification. Le mélange de la poudre de COMPOUND, de l'agent porogène et de l'agent expanseur s'effectue à sec ou en dispersion aqueuse.

Principale application: Domaines d'utilisation des hyperfréquences tels que radar et transmissions.

- 1 -

## Câble coaxial pour transmission de signaux en hyperfréquences

La présente invention concerne un câble coaxial destiné à la transmission de signaux de très hautes fréquences.

La propagation de signaux est régie par des lois électromagnétiques qui tiennent compte, en particulier, de la fréquence, de l'aspect géométrique et des caractéristiques de la matière traversée, et de la température.

Certains systèmes de transmission et de détection, notamment, exigent, pour leurs performances, l'utilisation de signaux de très hautes fréquences dont l'atténuation est d'autant plus importante que la fréquence est élevée.

Or, si l'on considère qu'il n'est généralement pas possible d'agir sur la température, il n'est, en conséquence, possible d'intervenir que sur les caractéristiques géométriques et physiques de la matière traversée, dont la plus importante est la constante diélectrique de la couche de matière isolante située entre le conducteur d'âme et le blindage.

Diverses solutions, destinées à diminuer la valeur de la constante diélectrique de la couche de matière isolante située entre le conducteur d'âme et le blindage, en vue de la rapprocher de celle de l'air ($\mathcal{E} = 1$ ) ont été envisagées. Ces solutions consistent, pour la plupart, à utiliser un matériau expansé, afin de réduire la quantité de matériau de base par unité de volume, pour obtenir une constante diélectrique aussi voisine que possible de celle du gaz emprisonné dans les cellules du matériau expansé.

Parmi ces solutions, on peut citer celles décrites dans les brevets français :
-FR-A-2.211162, ayant pour objet un procédé pour la production de fils et câbles isolés avec des polyoléfines fortement expansées, qui consiste à introduire un mélange de polyoléfine, d'agent de nucléation et d'un liquide volatil dans une extrudeuse, en vue de recouvrir à chaud la surface du conducteur d'âme d'une couche de mousse polyoléfine fortement expansée (degré d'expansion 60 %).

- FR-A-2.240507, ayant pour objet un câble coaxial et son procédé de réalisation, qui consistent à utiliser un diélectrique en polymère expansé d'éthylène ou de propylène, dont le dépôt, sur le conducteur d'âme, s'effectue par extrusion avec expansion par un agent gonflant injecté dans la composition avant extrusion.

Trois solutions sont actuellement utilisées industriellement pour obtenir un matériau isolant dont la constante diélectrique est faible.

Le polyéthylène cellulaire extrudé, dont la constante diélectrique est d'environ 1,55, mais dont la mauvaise tenue en température limite l'utilisation à une atmosphère tempérée. De plus, son atténuation limite son utilisation à des fréquences inférieures à 1 GHz.

Le fluoréthylène propylène (F.E.P.) bullé et extrudé, dont la constante diélectrique est d'environ 1,4 et dont la température de service est supérieure à celle du polyéthylène cellulaire extrudé, mais dont l'atténuation en limite l'emploi à des fréquences inférieures à 800 MHz.

Le polytétrafluoréthylène (P.T.F.E.) rubanné, dont la constante diélectrique est d'environ 1,4, qui offre des caractéristiques adaptées à la transmission de signaux dont la fréquence peut atteindre 10 GHz, mais qui nécessite une mise en forme préalable et une mise en place par rubannage assez délicate, qui en limitent actuellement les longueurs effectives d'emploi.

Le câble coaxial selon l'invention, vise à remédier aux inconvénients présentés par les solutions utilisées actuellement, en réalisant une couche isolante à faible constante diélectrique, obtenue de façon continue et homogène, en faisant appel à un procédé d'extrusion à froid classique.

Les produits et le procédé utilisés permettent d'obtenir un câble coaxial dont les caractéristiques géométriques électriques et thermiques sont supérieures à tous les câbles existants, sans aucune limite due aux techniques de mise en oeuvre, comme c'est actuellement le cas avec le rubannage, et,cela, en utilisant des moyens de production très proches des moyens traditionnels utilisés jusqu'alors dans ce type de fabrication.

Ce câble coaxial, dont la couche de matière isolante diélectrique, est constituée de polytétrafluoréthylène expansé ou d'une composition comportant au moins 80 % de ce produit nommé ci-après COMPOUND, se caractérise principalement en ce que cette couche de matière isolante est obtenue directement par extrusion à froid d'une poudre de COMPOUND, du mélange intime d'un agent porogène et d'un agent expanseur, et d'une essence de lubrification.

La poudre de COMPOUND a une granulométrie inférieure à 500 microns et de préférence comprise entre 300 et 400 microns.

L'agent porogène appartient aux séries aromatiques et peut être constitué d'un composé tel que le benzène, le toluène, le naphtalène, le benzaldéhyde, l'aniline ou d'un de leurs dérivés mono ou polyhalogéné ou de leurs mélanges, et dont le point de fusion est, de préférence, compris entre 50 et I00° C et le point d'ébullition inférieur à 300°C. Cet agent porogène est choisi, de préférence, parmi les produits ayant tendance à sublimer.

Suivant la nature de l'agent porogène, il peut être nécessaire d'utiliser un agent expanseur.

L'agent expanseur est de l'azodicarbonamide activé ou non, de l'azodicarbonamide modifié, du 5 phényl tétrazol et ses dérivés ou un déri-

- 4 -

vé aromatique des hydrazines, dont le point de décomposition est compris entre 200 et 390° C.

L'agent porogène et l'agent expanseur ont une granulométrie inférieure à 200 microns et de préférence entre 50 et 100 microns.

L'essence de lubrification est un mélange d'hydrocarbures aliphatiques dont la température d'évaporation est inférieure à la température de sublimation ou de décomposition des agents porogène et expanseur.

Les proportions employées sont de 30 à 85 % pour le COMPOUND, de 10 à 50 % pour le mélange intime d'agents porogène et expanseur et de 5 à 20 % pour l'essence de lubrification.

Selon un premier procédé, le mélange des composants s'effectue à sec.

Selon un second procédé, préférentiel, le mélange est obtenu par dispersion séparée dans un liquide de la poudre de COMPOUND, d'une part, et des agents porogène et expanseur, d'autre part, suivi du mélange du tout et de l'évaporation du liquide et de la lubrification de la poudre obtenue avec l'essence en vue de son extrusion à froid directement autour du conducteur d'âme. Extrusion qui est suivie d'un processus d'évaporation et de frittage.

D'autres caractéristiques et avantages apparaîtront dans la description qui va suivre d'un câble coaxial réalisé conformément à l'invention, selon le procédé aqueux.

Le procédé en dispersion aqueuse permet d'obtenir des grains de dimensions très inférieures à ceux obtenus par mélange à sec et d'augmenter l'homogénéité et la régularité de la couche isolante qui présente des porosités de l'ordre du micron.

Le principe consiste à mélanger avec la poudre de COMPOUND, un produit se sublimant ou se décomposant avant ou pendant le frittage en en constituant un espace vide de volume égal ou supérieur à celui du grain employé.

La température de sublimation ou de décomposition de l'agent expanseur doit être supérieure à celle de l'essence, de façon que le COMPOUND soit déjà aggloméré lors de la sublimation ou de la décomposition.

Le mode d'extrusion est d'un type classique pour le COMPOUND avec cependant la nécessité d'utiliser un outillage spécial.

Le frittage, du fait de l'adjonction d'un produit se sublimant ou se décomposant, doit se faire en trois zônes distinctes dans un four spécial,de façon à obtenir successivement : l'évaporation des essences, la sublimation ou la décomposition du produit d'expansion puis le frittage du COMPOUND.

Le résultat obtenu en utilisant le COMPOUND expansé pour réaliser ce câble coaxial permet d'obtenir une constante diélectrique de 1,3 sans difficulté majeure.

Le câble coaxial selon l'invention est destiné principalement aux domaines d'utilisation des hyperfréquences tels que radar, l'électronique et les transmissions. Leur souplesse est un avantage par rapport aux guides d'ondes rigides.

- 6 -

Revendications

I. Câble coaxial dont la couche de matière isolante diélectrique est constituée de polytétrafluoréthylène expansé ou d'une composition comportant au moins 80 % de ce produit nommé ci-après COMPOUND caractérisé en ce que la couche de matière isolante est obtenue directement par extrusion à froid d'une poudre de COMPOUND, du mélange intime d'un agent porogène et d'un agent d'expansion et d'une essence de lubrification.

2. Câble coaxial, selon la revendication 1, caractérisé en ce que la poudre de COMPOUND a une granulométrie inférieure à 500 microns et de préférence comprise entre 300 et 400 microns.

3. Câble coaxial, selon la revendication 1, caractérisé en ce que l' agent porogène est un composé tel que le benzène, le toluène, le naphtalène, le benzaldéhyde, l'aniline ou d'un de leurs dérivés mono ou polyhalogéné ou de leurs mélanges.

4. Câble coaxial, selon les revendications 1 ou 3, caractérisé en ce que l'agent porogène a un point de fusion compris entre 50 et I00° C et un point d'ébullition inférieur à 300° C.

5. Câble coaxial, selon les revendications 3 ou 4, caractérisé en ce l'agent porogène est choisi, de préférence, parmi les produits ayant tendance à sublimer.

6. Câble coaxial, selon la revendication 1, caractérisé en ce que l' agent expanseur est de l'azodicarbonamide, activé ou non, de l'azodicarbonamide modifié, du 5 phényl tétrazol et ses dérivés ou un dérivé aromatique des hydrazines.

7. Câble coaxial, selon la revendication 6, caractérisé en ce que l' agent expanseur a un point de décomposition compris entre 200 et 390°C

0140757

7

8. Câble coaxial, selon la revendication I, caractérisé en ce que l'agent porogène et l'agent expanseur ont une granulométrie inférieure à 200 microns et de préférence entre 50 et 100 microns.

9. Câble coaxial, selon la revendication I, caractérisé en ce que la température d'évaporation de l'essence de lubrification est inférieure à la température de sublimation ou de décomposition des agents porogène et expanseur.

10. Câble coaxial, selon la revendication I, caractérisé en ce que les proportions utilisées sont de 30 à 85 % pour le COMPOUND, de 10 à 50 % pour le mélange intime d'agents porogène et expanseur et de 5 à 10 % pour l'essence de lubrification.

11. Câble coaxial, selon la revendication I, caractérisé en ce que le mélange de la poudre de COMPOUND, de l'agent porogène et de l'agent expanseur s'effectue à sec.

12. Câble coaxial, selon les revendications I et IO, caractérisé en ce que le mélange de la poudre de COMPOUND avec les agents porogène et expanseur s'effectue en dispersion aqueuse.

13. Câble coaxial, selon la revendication 12, caractérisé en ce que le procédé utilisé pour obtenir le mélange des composants consiste à disperser séparément dans un liquide la poudre de COMPOUND, d'une part,et les agents porogène et expanseur,d'autre part, à mélanger le tout, à faire évaporer le liquide, et à lubrifier la poudre obtenue avec de l'essence en vue de son dépôt, par extrusion à froid, directement autour du conducteur d'âme, suivie d'un processus d'évaporation et de frittage.